Europäisches Patentamt

**European Patent Office**

Office européen des brevets

(11) Publication number: **0 095 254**

A2

(12) **EUROPEAN PATENT APPLICATION**

(21) Application number: 83302369.0

(22) Date of filing: 26.04.83

(51) Int. Cl.³: **G 02 B 5/16**
**H 01 B 11/00**

(30) Priority: 27.05.82 JP 88741/82
09.09.82 JP 135868/82

(43) Date of publication of application:
30.11.83 Bulletin 83/48

(84) Designated Contracting States:
DE FR GB

(71) Applicant: NISSAN MOTOR COMPANY, LIMITED
No.2, Takara-cho, Kanagawa-ku
Yokohama-shi Kanagawa-ken 221(JP)

(72) Inventor: Kawakami, Yasushi
Honatsugi Coop 11-605 76-2, Onna
Atsugi-shi Kanagawa-ken(JP)

(74) Representative: Freed, Arthur Woolf et al,
MARKS & CLERK 57-60 Lincoln's Inn Fields
London WC2A 3LS(GB)

(54) Composite cable.

(57) A composite cable wherein an optical fiber (1) and plurality of conductors (2) are arranged integrally and bound together by means of an insulating material (3). The ends of the plurality of conductors (2) are folded over the end of the insulating material (3) and crimped by means of a sleeve (5) made of conductive metal to one end of the composite cable (A). The ends of the plurality of conductors (2') are also folded over the end of the insulating mater (3) and crimped by means of a female socket (6) made of conductive metal to the other end of the composite cable (A'). The opposing ends of two composite cables (A, A') can be brought in close contact with each other so that the two optical fibers (1, 1') can be connected to each other and the sleeve (5) is fitted into the female socket (6) to connect the conductors (2). Therefore, the wiring is simplified and requires very little space. These composite cables may be applied to optical communication equipment.

FIG.4

A A'

## COMPOSITE CABLE

The present invention relates to a composite cable wherein an optical fiber for transmitting information optically and a plurality of electrical conductors for transmitting electrical signals are surrounded by an insulating material.

It is an object of the present invention to provide a composite cable for use between a switch board and main electrical control unit in which an optical fiber for transmitting optical information from the switch board to the main control unit and a plurality of conductors for transmitting electrical signals from the main control unit to the switch board are combined to form a composite cable in order to simplify installation and save wiring space.

A more complete understanding of the present invention may be obtained from the following description taken in conjunction with the drawings in which like reference numerals designate corresponding elements and in which:

Fig. 1 is a perspective view in cross-section of a first preferred embodiment of a composite cable according to the present invention;

Fig. 2 is a perspective view in cross-section of a second embodiment of the composite cable according to the present invention;

Fig. 3 is a cross-sectional view of a third embodiment of the composite cable according to the present invention:

2.

Fig. 4 is a longitudinally sectioned view of opposing ends of two coaxial composite cables;

Fig. 5 is a perspective view of opposing ends of the two coaxial composite cables shown in Fig. 4; and

Fig. 6 is a longitudinally sectioned view of opposing ends of the two coaxial composite cables wherein the two coaxial composite cables are interconnected.

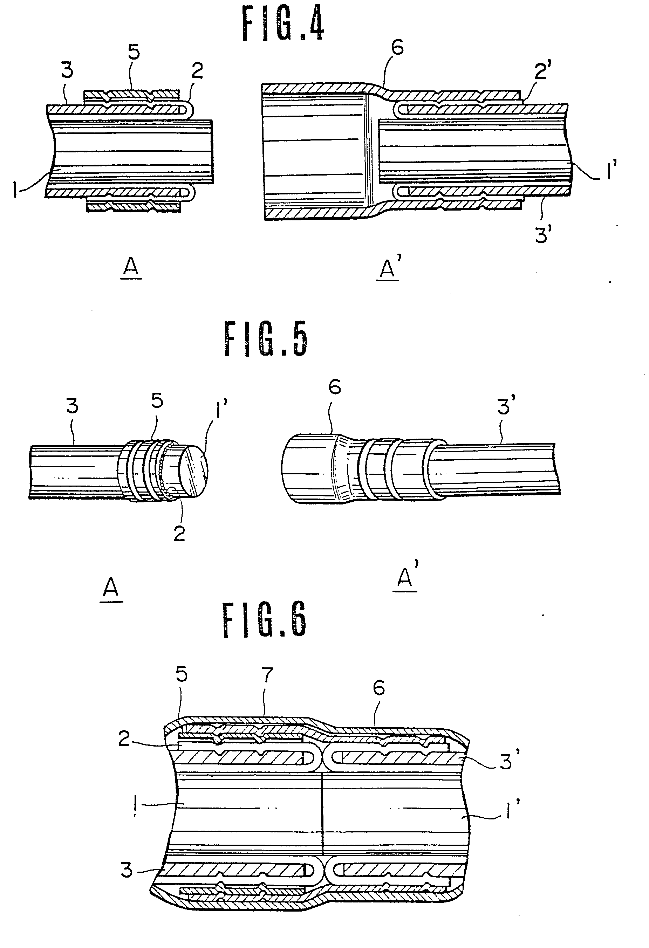

As shown in Fig. 1, an optical fiber 1 is located along the center of the composite cable for transmitting an optical signal from an optical transmitting unit to a receiving unit. A plurality of conductors 2 made of an electrically conductive metal such as copper are disposed around the optical fiber 1 so as to symmetrically surround the optical fiber 1. Furthermore, the optical fiber 1 and plurality of conductors 2 are coated with an insulating material 3 so that the cross section of the composite cable A is circular. In this embodiment, the plurality of conductors 2 constitute a single wire.

The composite cable A can be used to connect a power supply line of the optical transmitting unit (not shown) to that of the optical receiving unit (not shown) via the signal line comprising the plurality of conductors 2 and to connect an output port of the optical transmitting unit to an input port of the optical receiving unit. Consequently, all of the required wiring between the optical transmitting and receiving units can be carried out with a single composite cable A.

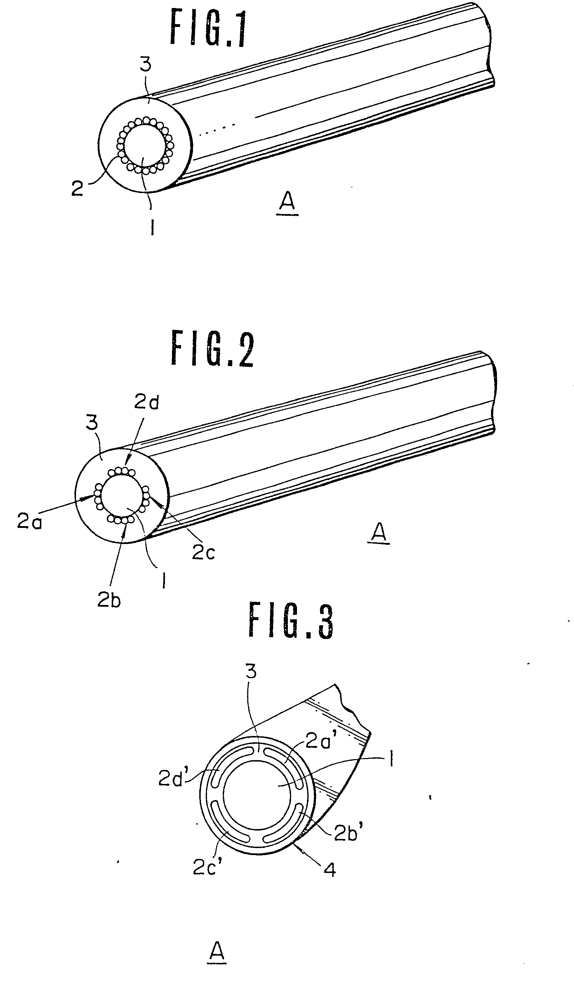

As shown in Fig. 2, in the second embodiment of the cable A, four conductors are defined by bundling separate wires together and each of the four conductors 2a to 2d is separately disposed around the periphery of the optical fiber 1. The optical fiber 1 and the group of conductors 2a to 2d are coated with an insulating material 3.

The composite cable shown in Fig. 2 can be used to simplify the wiring between communication units which can send and receive optical and electrical signals simultaneously.

As shown in Fig. 3, in the third embodiment of the cable A, the optical fiber 1 is located at the center of the cable A and coated with the insulating material 3. A plurality of conductors are collected and divided into four groups 2a' to 2d'. They are arranged and symmetrically around and concentric with the optical fiber 1. A cable sheath 4 covers the insulating material which in turn isolates each of the conductor groups 2a' to 2d', and the optical fiber 1.

In the first, second, and third embodiments, the optical fiber and electrical conductors are arranged in a coaxial configuration. Alternatively, the composite cable may be arranged in a parallel-line cable or multi-conductor cable configuration. In addition, although the number of conductor groups as shown in Figs. 2 and 3 is four, the number may be selected arbitrarily according to the situation.

4.

Fig. 4 shows an example of two composite cables A and A' which can be interconnected at opposing ends. The optical fiber 1 is exposed at one end of a male-type composite cable A, i.e., it extends beyond the end of the insulating material 3. The corresponding ends of the conductors 2 are folded over the end of the insulating material 3 and secured within a sleeve 5 made of conductive metal by means of crimping so that the end of the optical fiber 1 projects from the sleeve 5. One end of the optical fiber 1' of the other composite cable A' is also exposed and the corresponding ends of the conductors 2' are also folded over the end of the insulating material 3'. A female socket 6 made of conductive metal is secured over the exposed ends of the optical fiber 1', conductors 2', and insulating material 3' by means of crimping. The female socket 6 tapers outwardly from the end of the cable A' as seen from Fig. 4.

The sleeve 5 is fitted into the female socket 6 so as to bring the end of the optical fiber 1 of one composite cable A into contact with that 1' of the other composite cable A'. In this case, the sleeve 5 is also in close contact with the female socket 6.

Fig. 5 is a perspective view of two composite cables shown in Fig. 4. As shown in Fig. 5, the sleeve 5 crimped onto the end of the coaxial composite cable A constitutes a male terminal and the female socket 6 similarly crimped onto the end of the other coaxial composite cable A' constitutes a female terminal. The sleeve 5 integrally secured to the coaxial composite cable A can fit snugly into the female socket 6 of the other coaxial composite cable A'.

Fig. 6 is a longitudinal sectional view of the two composite cables wherein the two composite cables A and A' are interconnected optically and electrically.

As shown in Fig. 6, the end of the optical fiber 1 of the composite cable A is brought in close contact with the opposing end of the optical fiber 1' of the other composite cable A'. At this time, the sleeve 5 and the female socket 6 are secured together to connect the composite cable A to the other composite cable A'. In Fig. 6, an insulating capsule 7 is provided for sealing the two cables A and A' since the ends of the cables A and A' would otherwise be exposed to atmosphere.

Although the sleeve 5 and the female socket 6 are fixed by crimping to the conductors 2, 2' at the end of the corresponding composite cable, these two terminals 5 and 6 may alternatively be fixed thereto by soldering.

In this way, two composite cables A and A' can be interconnected so that an optical signal can be transmitted across the interconnected ends of the optical fibers. In addition, power may be conducted over the conductors of the two interconnected composite

6.

cables A and A'. In this example, leakage of light is prevented by the crimping seal of the sleeve and the female socket and electrical connection between the conductors 2 is similarly ensured.

As described hereinbefore, according to the present invention there is provided a composite cable comprising an optical fiber for transmitting an optical signal, a plurality of conductors for transmitting electrical signals, and an insulating material arranged integrally so as to form a composite cable. The composite cable can be employed as a connecting means between optical transmitting equipment and optical receiving equipment. The overall cross-sectional area is reduced and the overall rigidity is increased so that the wiring between the equipment can be simplified, and wiring space can be saved.

Furthermore, according to the present invention, such a composite cable may be divided into a number of parts and the individual parts thereof may be interconnected in such a way that one end of one composite cable, at which the optical fiber and conductors are exposed, is fitted into a receptable and brought into close contact with the end of the other composite cable, at which the optical fiber and conductors are exposed. The ends are brought in close contact with each other and coated with another insulating layer. Consequently, the wiring of the composite cables can be facilitated within limited spaces. This can be applied to an automotive vehicle where the wiring space is severely limited.

CLAIMS

1.    A composite cable for connecting optical transmitting and receiving apparatus, comprising:

(1)  at least one optical fiber (1, 1') for transmitting an optical signal;

(2)  a plurality of conductors (2, 2a to 2d, 2a' to 2d') arranged around said optical fiber.(1, 1') for transmitting at least one electrical signal; and

(3)  an insulating material (3, 3') which coats said conductors and optical fiber to mutually insulate same and hold same in a fixed spatial relationship.

2.    A composite cable as set forth in claim 1, characterised in that said plurality of conductors (2, 2a to 2d, 2a' to 2d') are arranged radially symmetrically around the optical fiber (1, 1') and concentrically therewith.

3.    A composite cable as set forth in claim 1, characterised in that said plurality of conductors are divided into several mutually insulated groups (2a to 2d, 2a' to 2d') and disposed along the periphery of said optical fiber (1).

4.    A composite cable as set forth in claim 1, characterised in that said plurality of conductors are divided into mutually insulated groups (2a' to 2d') and disposed over the periphery of said optical fiber (1) coated with said insulating material (3).

8.

5. A composite cable as set forth in claim 4, which further comprises a sheath (4) enclosing said insulating material (3).

6. A composite cable as set forth in claim 1, which further comprises a sleeve (5) made of conductive metal provided at one end of the composite cable (A) wherein said optical fiber (1) is extended from said plurality of conductors (2) for making a - close contact with an end of the optical fiber (1') of another composite cable (A') and said plurality of conductors (2) are folded over said insulating material (3) and brought in close contact with said sleeve (5).

7. A composite cable as set forth in claim 6, which further comprises a female socket (6) made of conductive metal at the other end of the composite cable (A') for interconnecting with said sleeve (5) of the other composite cable (A) wherein said optical fiber (1) extended from said plurality of conductors (2) and said plurality of conductors (2) are folded over said insulating material (3) and brought in close contact with said female socket (6).

8. A composite cable as set forth in claim 7, which further comprises an insulating material (7) which covers said sleeve (5) and female socket (6) so as to insulate them from another conductive element.

2/2 0095254

# FIG.4

3   5   2                    6            2'

1                                              1'

3'

A                            A'

# FIG.5

3   5   1'          6              3'

2

A                            A'

# FIG.6

5   7        6

2                              3'

1                              1'

3

# FIG.1

3
2
1

A

# FIG.2

2d
3
2a
2c
1
2b

A

# FIG.3

3
2a'
2d'
1
2b'
2c'
4

A